# EUROPÄISCHE PATENTSCHRIFT

(11) **EP 0 950 884 B1**
(45) Veröffentlichungstag und Bekanntmachung des Hinweises auf die Patenterteilung: **18.08.2004**
(21) Anmeldenummer: 99106362.9
(22) Anmeldetag: 29.03.1999
(51) Int. Cl.: G01L 9/00, G01L 1/14, G01L 5/22

(54) **Kapazitiver Sensor**
Capacitive sensor
Capteur capacitif

(30) Priorität: 17.04.1998 DE 19817172; 19.12.1998 DE 19858828
(43) Veröffentlichungstag der Anmeldung: 20.10.1999
(73) Patentinhaber: Micronas GmbH, 79108 Freiburg (DE)
(72) Erfinder: Igel, Günter, 79331 Teningen (DE); Sieben, Ulrich, 79276 Reute (DE); Giehl, Jürgen, 79199 Kirchzarten (DE)
(74) Vertreter: Patentanwälte Westphal, Mussgnug & Partner

(56) Entgegenhaltungen:
- EP-A- 0 041 693
- WO-A-96/13705
- DE-A- 3 734 023
- DE-A- 4 231 120
- US-A- 5 511 428

## Beschreibung

Die Erfindung betrifft einen kapazitiven Sensor gemäß den Merkmalen des Oberbegriffs des Anspruchs 1.

Ein solcher Sensor ist aus der DE 33 10 643 A1 bekannt und kann sowohl zur absoluten als auch zur relativen Druckmessung verwendet werden. Eine weitergehendere, differenziertere Information ist mit diesem Sensor nicht zu erhalten.

In WO-A- 96/13705 ist ein Drucksensor beschrieben. Einer Plattenelektrode liegen mehrere Streifenelektroden mit jeweils einem elektrischen Anschluß gegenüber, so dass mehrere Kondensatoren gebildet werden.

Aus EP-A- 0 041 693 ist ein kapazitiver Sensor zur Erfassung von Fingerabdrücken bekannt, der aus einer Vielzahl von Kondensatoren aufgebaut ist. Einer Metallplatte - der ersten Elektrode - liegt eine Vielzahl von Metallplättchen gegenüber, welche die zweiten Elektroden darstellen. Jede dieser zweiten Elektroden bzw. jedes der Metallplättchen weist einen elektrischen Anschluß auf, so dass ebenso viele Kondensatoren gebildet werden, wie Metallplättchen vorhanden sind. Es werden daher zahlreiche Kodensatoren gebildet, die eine gemeinsame große Elektrode - die Metallplatte - aufweisen, der zahlreiche kleine als Metallplättchen ausgeführte Elektroden gegenüber liegen.

Der Erfindung liegt die Aufgabe zugrunde, einen kapazitiven Sensor zu schaffen, der eine differenzierte Aussage über die Meßgröße ermöglicht.

Diese Aufgabe wird durch einen Sensor mit den Merkmalen des Anspruchs 1 gelöst.

Durch den dadurch gegebenen räumlich differenzierten Kapazitätswert oder die räumlich, differenzierten Kapazitätswerte und insbesondere durch die erfindungsgemäße Maßnahme, jedem von einem Element gelieferten Messsignal gemäß der in Patentanspruch 1 definierten Lehre eine ortsspezifische Kennzeichnung zuzuordnen, ist es möglich, wesentlich differenziertere Aussagen über die Messgröße oder auch den Zustand des Sensors zu treffen. Beispielsweise lässt sich das Profil einer die Messkapazität durchfließenden Flüssigkeit oder eines Gases anhand der räumlichen Gliederung der Kapazitätsverteilung bestimmen und darstellen. Auch lässt sich durch eine derartige Anordnung die räumliche Zuordnung der Elektroden zueinander wesentlich differenzierter darstellen, da nun ein Abweichen. aus der parallelen Anordnung oder ein Gegeneinanderverschieben der Elektroden erkennbar ist und dadurch bei der Auswertung der Messsignale berücksichtigt werden kann. Darüber hinaus ist es möglich, anhand der ortsauflösenden Messung ein Fehlverhalten des kapazitiven Sensors durch Ermüdung anhand der detektierten Lageveränderung der Elektroden zueinander zu erkennen und dadurch einerseits eine Aussage über die Qualität der Messung selbst und andererseits über die verbleibende Restlebenszeit des Sensors zu machen. Damit ist es möglich, den erfindungsgemäßen Sensor rechtzeitig vor einem solchen zu erwartenden Ausfall auszutauschen und durch einen funktionsfähigen erfindungsgemäßen Sensor zu ersetzen.

Durch die räumlich strukturierte Elektrode, die eine Vielzahl voneinander beabstandeter zweidimensional angeordneter Elemente umfasst, kann eine ausgeprägte räumliche Differenzierung des Messergebnisses erreicht werden. Durch diese zweidimensionale Anordnung gelingt es nun, die Messsignale nicht nur in eine Richtung zu differenzieren, sondern in einer durch die Substratoberfläche definierte Ebene räumlich differenziert darzustellen. Dabei hat sich als besonders vorteilhaft herausgestellt, die einzelnen Elemente zum einen schachbrettartig anzuordnen und darüber hinaus diese vorzugsweise nach ihren physikalischen Eigenschaften (Größe, Material, u.s.w) identisch auszubilden. Dadurch wird eine besonders einfache ortsauflösende Auswertung der Messsignale der einzelnen Elemente erreicht, da die einzelnen Elemente unter den vergleichbaren Bedingungen der Gegenelektrode dieselben Messsignale zeigen. Mithin bestimmt sich der jeweilige Unterschied in den Messsignalen im Wesentlichen durch die räumlich differenzierte Struktur der zu messenden Größe bzw. durch die räumlich veränderliche Struktur des Sensors selbst. Zwar ergibt sich durch die zweidimensionale Anordnung der Elemente automatisch eine flächenmäßige Verkleinerung der Elemente und dadurch eine Verringerung der daraus resultierenden Messkapazität, jedoch kann dieser Nachteil durch entsprechende geeignete Wahl der Signalverstärker bzw. der elektronischen Auswerteeinheit wettgemacht werden. Weiterhin wird dieser Nachteil stets dann in Kauf genommen, wenn ein Erfordernis für das zweidimensional räumlich differenzierte Messsignal existiert.

Gemäß einem besonderen Ausführungsbeispiel der Erfindung ist die räumlich strukturierte Elektrode aus mehreren zueinander parallel angeordneten, streifenförmigen Elementen gebildet. Durch diese Ausbildung der differenzierten räumlichen Struktur mit mehreren parallelen streifenförmigen Elementen gelingt es, eine zweidimensionale örtliche Auflösung von einem streifenförmigem Element zum nächsten streifenförmigen Element zu erreichen. Durch die Ausbildung als Streifen gelingt es, die Fläche des streifenförmigen Elementes recht groß zu halten und dadurch die durch dieses streifenförmige Element bestimmte räumlich differenzierte Kapazität als Messsignal selbst wiederum entsprechend der Fläche des streifenförmigen Elementes groß zu halten. Mithin ist, wenn überhaupt, nur eine begrenzte Signalverstärkung erforderlich, um dieses kapazitive Messsignal einer weitergehenden Auswertung zuzuführen. Damit ist auch ein recht gutes Signal-Rauschverhältnis für dieses räumlich differenzierte Messsignal gegeben.

Als besonders vorteilhaft hat sich herausgestellt die beabstandeten zweidimensional angeordneten Elemente kreisförmig oder quadratisch auszubilden, da diese sich sehr vorteilhaft mit Abstand zueinander anordnen lassen, wobei die durch die Elemente bedeckte Fläche, bezogen auf die Gesamtfläche der räumlich strukturierten Elektrode, einem sehr hohen Anteil ausmacht, welcher bei anderen, für jedes Element individuellen Gestaltung, nicht erreichbar ist. Demzufolge zeigen derartige Anordnungen aus kreisförmigen oder quadratischen Elementen bei zweidimensionalen Anordnungen vergleichbar hohe Kapazitäten, was zu guten Messsignalen und damit zu aussagekräftigen Messungen führt.

Gemäß einem bevorzugten Ausführungsbeispiel des erfindungsgemäßen kapazitiven Sensors ist eine elektronische Anordnung zur Verarbeitung der Messsignale in einen der Substratkörper integriert, wobei diese Integration vorzugsweise unterhalb der Elektrode des betreffenden Substratkörpers erfolgt. Durch diese Integration, insbesondere als Vertikalintegration, des kapazitiven Sensors mit der elektronischen Anordnung zur Verarbeitung der Messsignale, wird die räumliche Ausnutzung des kapazitiven Sensors verbessert. Da die Packungsdichte des Gesamtsystems des kapazitiven Sensors mit der Signalverarbeitungseinrichtung erhöht wird, wird die Größe des Gesamtsystems verringert. Zudem werden die Signalwege für die Messsignale des kapazitiven Sensors verkürzt, wodurch ein störungsfreies und genaueres Messen bzw. Auswerten der Messgrößen des kapazitiven Sensors ermöglicht ist.

Als besonders vorteilhaft hat sich erwiesen, in der integrierten elektronischen Anordnung zur Verarbeitung der Messsignale Elemente zur ortsauflösenden Verarbeitung der ortsauflösenden Messung vorzusehen und diese bevorzugt in enger räumlicher Nähe zu den einzelnen Elementen der räumlich strukturierten Elektrode anzuordnen. Dadurch wird ermöglicht, weitgehend oder vollständig identische Elemente zur ortsauflösenden Verarbeitung vorzusehen und dadurch einen kaskadierenden Aufbau der gesamten elektronischen Anordnung der Messsignale zu erreichen. Dadurch lassen sich einerseits die Kosten für die Entwicklung einer solchen Anordnung zur Verarbeitung der Messsignale wie auch deren Kosten aufgrund von Ausfällen der differenzierten Elemente zur ortsauflösenden Verarbeitung mit der damit verbundenen erhöhten Wahrscheinlichkeit von Fehlern und damit von Ausfällen deutlich senken. Weiterhin lassen sich die durch die Elemente zur ortsauflösenden Verarbeitung ausgewerteten Messsignale durch eine gemeinsame zentrale Auswertung auf sehr einfach Weise zusammenfassend auswerten, da jedes dieser Messsignale durch eine identische oder weitgehend identische ortsauflösende Verarbeitung generiert wurde. Zudem gelingt es durch die enge räumliche Zuordnung der Elemente zur ortsauflösenden Verarbeitung zu den Elementen der räumlich strukturierten Elektrode, die die möglichen Signalverluste auf dem Weg von der Elektrode zu dem Element zur ortsauflösenden Verarbeitung auf ein Minimum zu begrenzen. Mithin lässt sich der Nachteil durch die notwendige flächenmäßige Verkleinerung der einzelnen Elektrodenelemente zu Erzielung eines räumlich differenzierten Messsignals stark begrenzen. Dieser Effekt wird noch dadurch verstärkt, dass die elektronische Anordnung signalverstärkende Elemente aufweist, die bevorzugt in unmittelbarer Nähe der Elemente der räumlich strukturierten Elektrode angeordnet sind. So muss das unverstärkte Messsignal nur einen sehr geringen Signalweg zu der dem jeweiligen Element zugeordneten Signalverstärkung oder auch Signalverarbeitung zurücklegen, während das weniger empfindliche, verstärkte Messsignal ohne größeren Signalverlust einer auch etwas weiter entfernten elektronischen Anordnung zur Verarbeitung der Messsignale, welche vorzugsweise als zentrale elektronische Anordnung für viele Elemente vorgesehen ist, zugeführt werden kann.

Gemäß einem vorteilhaften Ausführungsbeispiel des Sensors ist der zweite Substratkörper im Bereich der Elektrode als verformbare Membran ausgebildet und in dem ersten Substratkörper die elektronischen Anordnung der Messsignale integriert ist. Dadurch wird vermieden, dass die elektronische Anordnung durch das Verformen der Membran während der Messung beeinflusst werden kann. Weiterhin erweist sich eine derartige Aufgliederung auch im Hinblick auf die Langzeitstabilität des Sensors als sehr vorteilhaft, da sich erfahrungsgemäß durch das Verformen der Membran im Bereich einer dort integrierten elektronischen Anordnung mikroskopisch kleine Risse und Schädigungen der elektronischen Strukturen im Inneren des Substratkörpers ergeben, welche zum Ausfall des Sensors führen können.

Gemäß einem anderen Ausführungsbeispiel ist ein erster Teil der elektronischen Anordnung zur Verarbeitung der Messsignale im ersten Substratkörper und ein zweiter Teil der elektronischen Anordnung in dem zweiten Substratkörper angeordnet. Hierdurch kann die elektronische Anordnung in den beiden Substratkörpern aufgeteilt werden, so dass durch den erhöhten zur Verfügung stehenden Raumbereich eine wesentlich umfangreichere Funktionalität der elektronischen Anordnung in dem kapazitiven Sensor integriert werden kann. Dieses ist gerade dann vonnöten, wenn eine starke räumliche Differenzierung der Messsignale erforderlich ist. Dabei hat es sich als vorteilhaft herausgestellt, die Elemente zur ortsauflösenden Verarbeitung der ortsauflösenden Messung in dem Substratkörper anzuordnen, der die räumlich strukturierte Elektrode zeigt und die restliche elektronische Anordnung zur Auswertung der Messsignale in dem anderen Substratkörper unterzubringen. Dadurch ist ein störendes wechselseitiges Beeinflussen der in den verschiedenen Substratkörpern untergebrachten Teile der elektronischen Anordnung zur Verarbeitung der Messsignale weitgehend ausgeschlossen.

Gemäß einem anderen Ausführungsbeispiel der Erfindung ist wenigstens eine der Elektroden oder ein Teil dieser aus einem Teil einer Leiterbahn der elektronischen Anordnung zur Verarbeitung der Messsignale gebildet. Dies hat den Vorteil, dass neben den Leiterbahnen für die elektronische Anordnung, welche für die Verarbeitung der Messsignale erforderlich sind, keine zusätzlichen leitfähigen Flächen zur Bildung der Elektroden nötig sind und dadurch bei der Herstellung des Sensors auf die damit verbundenen Herstellungsschritte der Aufbringung einer zusätzlichen Metallisierungsebene auf die Substratkörper verzichtet werden kann. Durch diese verbindende, synergetische Nutzung der Leiterbahn oder der Leiterbahnen der elektronischen Anordnung zur Verarbeitung der Messsignale, einerseits als Leiterbahn für diese und andererseits als eine Messkapazität bildende Elektrode, lässt sich eine optimierte Anordnung für einen erfindungsgemäßen Sensor erreichen.

Gemäß einem weiteren Ausführungsbeispiel der Erfindung zeigt der Sensor ein dämpfendes System, das geeignet ist ein Schwingen der Membran dahingehend zu verhindern, dass das Schwingen der Membran zu keiner wesentlichen Beeinträchtigung des Messergebnisses führt. Ein solches dämpfendes System kann dadurch erreicht werden, dass der Bereich der beweglichen Membran mit einer Substanz gefüllt ist, die sich einer sehr schnellen kurzfristigen Lageänderung der Membran widersetzt. Dies kann beispielsweise durch eine Füllung mit einer Flüssigkeit einer definierten, nicht zu hohen Viskosität erreicht werden. Weiterhin ist es möglich, die Membran mit Verstärkungen oder Rippen zu versehen, die ein Aufschwingen der Membran in einem bestimmten Frequenzbereich verhindert, indem die Eigenresonanzfrequenz der Membran in einen gänzlich anderen Frequenzbereich als den Frequenzbereich, in dem eine besondere Belastung zu erwarten ist, verschoben wird. Weiterhin ist es möglich, die Membran mit einem Permanentmagneten zu versehen, der durch ein äußeres Magnetfeld dahingehend beeinflusst wird, dass einer Auslenkung der Membran mit dem Magneten aufgrund einer Schwingung entgegengewirkt wird. Eine derartige Dämpfung erweist sich gerade im Hinblick auf eine ortsauflösende Analyse des Messsignals als besonders vorteilhaft, da gerade nach Ausschluss eines Einwirkens eines ungewünschten Aufschwingens der Membran auf das örtlich differenzierte Messsignal dieses sich besonders gut auswerten lässt und die beschriebenen Aussagen, wie zu erwartende, verbleibende Restlebenszeit des Sensors, Auswerten der Qualität der Messergebnisse auf der Basis der örtlich differenzierten Messergebnisse und ähnliches, besonders gut ermöglicht ist.

Es ist vorteilhaft, wenn der Sensor aus Halbleitermaterial, insbesondere aus Silizium gebildet ist. Dann können der kapazitive Sensor und die integrierte Signalverarbeitungseinrichtung besonders einfach hergestellt werden. Zudem weist das Silizium zur Bildung der Membran günstige mechanische Eigenschaften auf. In diesem Fall erweist sich eine Ausbildung des erfindungsgemäßen Sensors als Druck-, Kraft- oder Beschleunigungssensor als besonders geeignet. Hier wirkt der Druck, die Kraft oder die Beschleunigung auf die durch den Druck, die Kraft oder die Beschleunigung verformbare Membran, was zu einer Veränderung der räumlichen Lage der Elektrode führt. Diese Veränderung bewirkt je nach Richtung und Art der Einwirkung der äußeren Einflussgröße ein unterschiedlich örtlich differenziertes Messsignal, beispielsweise führt eine senkrecht auf die Membran einwirkende Kraft zu keiner seitlichen Auslenkung der Membran, während durch ein Einwirken einer schräg dazu verlaufenden äußeren Kraft eine seitliche Verschiebung der Membran bewirkt wird und diese zu einem räumlich differenzierten Messsignal führt, da nun verschiedene Elemente der räumlich strukturierten Elektrode zur Bildung des Messsignals beitragen. Im Gegensatz zu den bekannten Kraftsensoren auf der Basis kapazitiver Sensoren, lässt sich nun der Anteil, welcher durch den zweiten Substratkörper aufgenommen wird und nicht zu einer Veränderung des Abstandes der Elektroden führt, abschätzen und bei der Auswertung berücksichtigen. Auf der Basis dieser räumlich differenzierten Information lässt sich damit ein Rückschluss auf die tatsächliche Größe der von außen einwirkende Kraft ziehen. Mithin ermöglicht der erfindungsgemäße Sensor eine wesentlich differenziertere Auswertung.

Weiterhin erweist sich eine Ausbildung des erfindungsgemäßen kapazitiven Sensors als Magnetfeldsensor als besonders geeignet. Ein derartiger Magnetfeldsensor zeigt im Bereich der Membran einen Permanentmagneten, der auf das in seiner Feldstärke zu bestimmende äußere Magnetfeld durch eine Lageveränderung reagiert und deren Ausmaß insbesondere unter Verwendung der ortsauflösenden Informationen ausgewertet und als Magnetfeldstärke ausgegeben werden kann.

Auch ist es gerade durch die ortsauflösende Messung möglich, räumlich differenzierte Strukturen zwischen den die Messkapazität bildenden Elektroden aufzulösen und darzustellen. Dadurch wird es nun möglich, das Profil einer durch den kapazitiven Sensor fließenden Flüssigkeit oder Gases zu bestimmen, wie auch anhand der Detektion von Druckänderungen entlang eines Materialstromes durch die Anordnung die Durchflussgeschwindigkeit oder auch die Durchflussmenge bestimmt werden kann.

Im Folgenden wird die Erfindung anhand der Zeichnungen näher erläutert. Es zeigen:
- Fig. 1: einen schematischen Aufbau eines erfindungsgemäßen Ausführungsbeispiels,
- Fig. 2: einen schematischen Aufbau eines Substratkörpers mit räumlich strukturierter Elektrode und
- Fig. 3: den Aufbau des Substratkörpers mit räumlich strukturierter Elektrode und elektronischer Anordnung aus der Fig. 2.

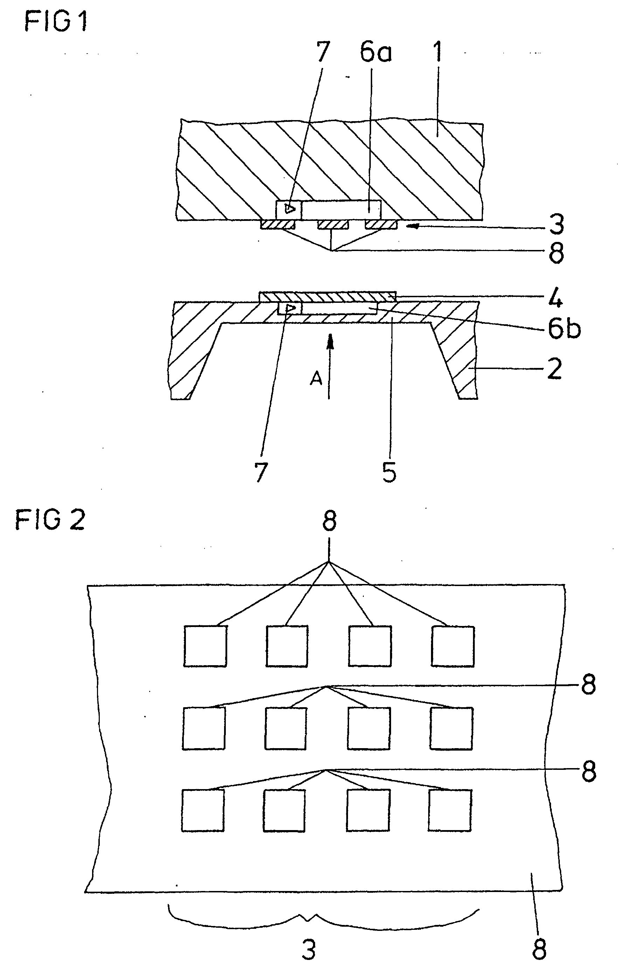

Die Figur 1 zeigt einen kapazitiven Sensor, der aus einem ersten Substratkörper 1 und einem zweiten Substratkörper 2 gebildet ist. Auf dem ersten Substratkörper 1 ist eine erste Elektrode 3 und auf dem zweiten Substratkörper 2 eine zweite Elektrode 4 derart angeordnet, dass sie zueinander beabstandet gegenüberliegen und eine Messkapazität bilden.

Der zweite Substratkörper 2 ist derart geformt, dass er im Bereich der zweiten Elektrode 4 eine Membran 5 aufweist, die auf Druck verformbar ist. Der Druck wird üblicherweise in Richtung des Pfeiles A auf die Membran 5 ausgeübt, wodurch diese entsprechend verformt wird. Die erste Elektrode 3 ist zur ortsauflösenden Messung räumlich strukturiert ausgebildet. Sie besteht aus zueinander parallel angeordneten, streifenförmigen Elementen 8. Jedes dieser streifenförmigen Elemente 8 bildet in Zusammenwirkung mit der zweiten Elektrode 4 eine spezifische Messkapazität. Alle derartigen Messkapazitäten bilden zusammen das räumlich strukturierte und damit ortsaufgelöste Messsignale. Dieses räumlich differenzierte Messsignal wird durch eine unterhalb der Elektrode 3 angeordnete erste elektronische Signalverarbeitungseinrichtung 6a, die die Messsignale der einzelnen streifenförmigen Elemente 8 durch enthaltene Verstärkerelemente verstärkt und differenziert nach der räumlichen Struktur der Elemente 8, differenziert verarbeitet. Diese Messsignale werden einer zweiten elektronischen Anordnung zur Verarbeitung der Messsignale 6b, welche in dem zweiten Substratkörper 2 unterhalb der zweiten Elektrode 4 integriert ist, zugeführt und dort endgültig ausgewertet. Die beiden elektronischen Anordnungen 6a, 6b bilden zusammen die gesamte elektronische Anordnung zur Auswertung der Messsignale, wobei diese Verarbeitung auch die ortsauflösende Verarbeitung umfasst.

Durch die Integration der elektronischen Anordnungen 6a, 6b zur Verarbeitung der Messsignale der Elektroden 3, 4 in den Substratkörpern 1, 2 in unmittelbarer Nähe der Elektroden 3, 4 wird der vorhandene Raum für den kapazitiven Sensor sehr effektiv ausgenutzt, wodurch die Größe des gesamten Systems reduziert wird. Zudem werden die Signalwege von den Messkapazitäten zu den elektronischen Anordnungen 6a, 6b und hier insbesondere zu den darin integrierten signalverstärkenden Elementen erheblich verkürzt. Hierdurch kann eine besonders zuverlässige Auswertung der Messsignale erfolgen.

Wirkt der Druck oder die äußere Kraft nicht in der durch den Pfeil A dargestellten idealen Weise zentral und senkrecht auf die Membran 5, sondern in deren Randbereich wie auch schräg zur Pfeilrichtung A, so bewirkt dies einerseits eine Verschiebung der zweiten Elektrode 4 in der durch ihre Fläche bestimmten Ebene und zum anderen bewirkt dies ein Auslenken der Membran 5 mit der daran angeordneten zweiten Elektrode 4 aus der Ebene, wie sie durch die Anordnung der zweiten Elektrode 4 in Figur 1 beschrieben ist. Damit ist einerseits eine Erhöhung oder Verminderung des Maßes der Überdeckung der Elektrode 4 und der ihr zugeordneten streifenförmigen Elemente 8 der ersten Elektrode 3 durch die Verschiebung gegeben und andererseits eine Verringerung des Abstandes einzelner Elemente 8 mit der zweiten Elektrode 4, während andere Elemente 8 den Abstand zu der zweiten Elektrode 4 vergrößern, was durch ein Verschwenken oder Verkanten der zweiten Elektrode 4 mit der Membran 5 gegeben ist. Derart differenzierte räumliche Gegebenheiten lassen sich durch die räumlich strukturierte Ausbildung der ersten Elektrode 3 mit den Elementen 8 und der zugeordneten elektronischen Anordnung zur Verarbeitung der Messsignale 6a, 6b erkennen und entsprechend auswerten. Im Rahmen dieser Auswertung lassen sich beispielsweise aufgrund der ortsauflösenden Auswertung Aussagen über das Maß der Verschiebung und daraus eine Aussage über die tatsächlich wirkende äußere Kraft und nicht nur über einen Anteil davon treffen. Weiterhin ist es möglich, durch eine geeignete Auswertung festzustellen, inwieweit die Membran in ihrer Elastizität eine Veränderung erfährt, was eine Aussage über die weitere Haltbarkeit der Membran und damit der Funktionstüchtigkeit des Sensors ermöglicht.

In dem gewählten Ausführungsbeispiel sind die Substratkörper 1, 2 aus Silizium gebildet. Dadurch wird eine besonders einfache Integration der elektronischen Anordnung 6a, 6b ermöglicht. Weiterhin lässt sich in Silizium aufgrund seiner mechanischen Eigenschaften eine verformbare Membran 5 recht einfach realisieren.

Figur 2 zeigt in einer Draufsicht eine schematische Anordnung einer Vielzahl voneinander beabstandeter Elemente 8, die gemeinsam eine räumlich strukturierte Elektrode 3 bilden. Diese räumlich strukturierte Elektrode 3 ist auf dem Substratkörper 1 angeordnet. Die räumlich strukturierte Elektrode 3 wird durch zwölf Elemente 8 realisiert, die in einer schachbrettartigen zweidimensionalen Struktur so angeordnet sind, dass die einzelnen Elemente 8 zum jeweils benachbarten einen solchen Abstand zeigen, dass ein Beeinflussen des einen Elementes auf das benachbarte Element 8 ausgeschlossen ist. Die zwölf Elemente 8 zeigen eine quadratische Struktur. Sie sind alle von gleicher Fläche und zeigen in Verbindung mit der schachbrettartigen Anordnung jeweils gleiche Abstände zu den ihnen benachbarten Elementen 8. Durch diesen Aufbau lässt sich eine sehr kostengünstige und sehr packungsdichte räumlich strukturierte Anordnung der Elektrode 3 aus den zwölf einzelnen Elementen 8 realisieren. Diese Anordnung zeigt keine elektrischen Zu- oder Ableitungen zu den einzelnen Elementen 8 der Elektrode 3 auf der Oberfläche des Substratkörpers 1. Dadurch ist eine Beeinflussung der Zuleitungen auf die Elemente 8, insbesondere auf die anderen Elemente 8 weitgehend ausgeschlossen. Darüber hinaus lassen sich die Elemente 8 in ihrer Oberfläche aufgrund des Nichtvorhandenseins oberflächlicher Zuleitungen deutlich vergrößert ausbilden, was die Messsignale jedes einzelnen Elementes 8 positiv beeinflusst.

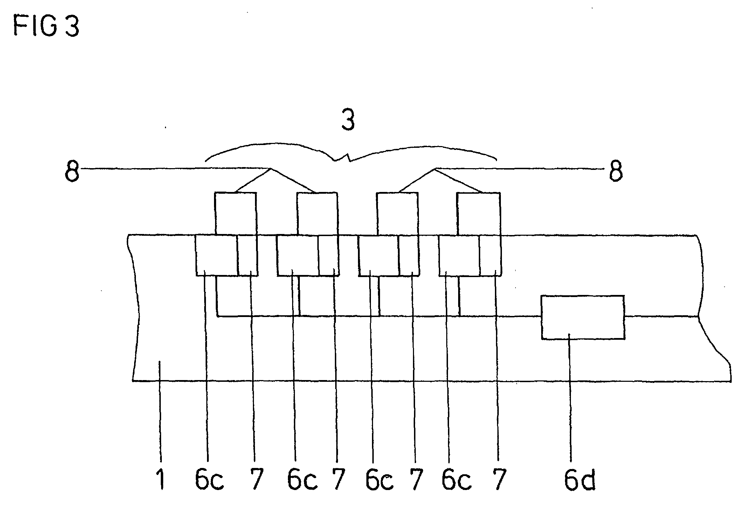

Die Figur 3 zeigt den vertikalen Aufbau des Substratkörpers 1 mit der Elektrode 3 aus der Figur 2. Von der räumlich strukturierten Elektrode 3 sind hier vier einzelne Elemente 8 dargestellt. Sie sind auf dem Substratkörper 1 oberflächlich angeordnet. Jedem Element 8 ist im Inneren des Substratkörpers 1 eine elektronische Anordnung 6c zugeordnet. Diese elektronische Anordnung 6c enthält jeweils ein signalverstärkendes Element 7, wodurch das Messsignal jedes Elementes nur einen sehr kurzen, unverstärkten Weg zurücklegen muss, bevor es in dem signalverstärkenden Element 7 verstärkt und durch die elektronische Anordnung 6c verarbeitet wird. Dabei wird das Messsignal von dem zugeordneten Element elementeindividuell bis zu einer bestimmten Verarbeitungstiefe verarbeitet, was mit einer ortsspezifischen Kennzeichnung verbunden ist. Diese verarbeiteten Messsignale werden einer gemeinsamen elektronischen Anordnung 6d zugeführt, die die Vielzahl der vorab verarbeiteten Messsignale der Elemente 8 zusammenfasst und in Zusammensicht differenziert nach den räumlichen Gegebenenheiten der einzelnen Elemente 8 auswertet. Diese in Figur 3 dargestellte Anordnung zeigt den beispielhaft modularen Aufbau der ersten Elektrode 3 mit mehreren einzelnen Modulen, die ein Element 8 mit elektronischer Anordnung 6c, mit signalverstärkendem Element 7 umfassen und mit der zentralen gemeinsamen elektronischen Anordnung 6d zur Auswertung der vorverarbeiteten Messsignale, Dieser kaskadierende, modulare Aufbau erweist sich als sehr kostengünstig und sehr einfach in der Herstellung.

### Bezugszeichenliste

- 1: erster Substratkörper
- 2: zweiter Substratkörper
- 3: erste Elektrode
- 4: zweite Elektrode
- 5: Membran
- 6a,b,c: elektronische Anordnung zur Verarbeitung von Messsigalen
- 6d: zentrale elektronische Anordnung zur Verarbeitung von Messsignalen
- 7: signalverstärkende Elemente
- 8: Elemente

## Patentansprüche

1. Kapazitiver Sensor mit einer ersten und einer zweiten Elektrode (3, 4), welche einander beabstandet gegenüberliegen und eine Messkapazität bilden, wobei die erste Elektrode (3) auf einem ersten Substratkörper (1) und die zweite Elektrode (4) auf einem zweiten Substratkörper(2) angeordnet sind, wobei wenigstens eine Elektrode (3, 4) zur ortsauflösenden Messung eine Vielzahl voneinander beabstandeter zweidimensional angeordneter Elemente (8) umfasst und räumlich strukturiert ausgebildet ist,
**dadurch gekennzeichnet, dass** jedem Element (8) im Inneren des Substratkörpers eine elektronische Anordnung (6c) zugeordnet ist, die je ein signalverstärkendes Element (7) aufweist, wobei jede dieser elektronischen Anordnungen (6c) so gestaltet ist, dass sie im Betrieb das Messsignal von dem zugeordneten Element (8) elementindividuell verarbeitet und dabei mit einer ortspezifischen Kennzeichnung versieht.

2. Kapazitiver Sensor nach Anspruch 1,
**dadurch gekennzeichnet, dass** die räumlich strukturierte Elektrode (3, 4) zueinander parallel angeordnete, streifenförmige Elemente (8) umfasst.

3. Sensor nach Anspruch 1,
**dadurch gekennzeichnet, dass** die Vielzahl der Elemente (8) schachbrettartig angeordnet sind.

4. Sensor nach einem der Ansprüche 1 oder 3,
**dadurch gekennzeichnet, dass** die Elemente (8) kreisförmig ausgebildet sind.

5. Sensor nach einem der Ansprüche 1 oder 3,
**dadurch gekennzeichnet, dass** die Elemente (8) quadratisch ausgebildet sind.

6. Sensor nach einem der vorstehenden Ansprüche,
**dadurch gekennzeichnet, dass** wenigstens in einem der Substratkörper eine elektronische Anordnung zur Verarbeitung der Messsigenale (6a, 6b, 6c, 6d) integriert ist.

7. Sensor nach Anspruch 6,
**dadurch gekennzeichnet, dass** die elektronische Anordnung zur Verarbeitung der Messsignale (6a, 6b, 6c) unterhalb der Elektrode (3, 4) des jeweiligen Substratkörpers (1, 2) angeordnet ist.

8. Sensor nach Anspruch 6 oder 7,
**dadurch gekennzeichnet, dass** die integrierte elektronische Anordnung zur Verarbeitung der Messsignale (6a, 6c) Elemente zur ortsauflösenden Verarbeitung der ortsauflösenden Messung umfasst.

9. Sensor nach Anspruch 8,
**dadurch gekennzeichnet, dass** die Elemente zur ortsauflösenden Verarbeitung der elektronischen Anordnung zur Verarbeitung der Messsignale (6a, 6b, 6c) den einzelnen Elementen (8) der räumlich strukturierten Elektrode (3) räumlich zugeordnet und zur Verkürzung der Signalwege unmittelbar an je ein Element (8) angrenzend im Substrat (1,2) angeordnet sind.

10. Sensor nach einem der vorstehenden Ansprüche,
**dadurch gekennzeichnet, dass** der zweite Substratkörper (2) im Bereich der Elektrode (4) als verformbare Membran (5) ausgebildet ist und dass die elektronische Anordnung zur Verarbeitung der Messsignale (6a, 6c) in dem ersten Substratkörper (1) integriert ist.

11. Sensor nach einem der vorstehenden Ansprüche 6 bis 10,
**dadurch gekennzeichnet, dass** ein erster Teil der elektronischen Anordnung (6a) in dem ersten Substratkörper (1) und ein zweiter Teil der elektronischen Anordnung (6b) in einem zweiten Substratkörper (2) angeordnet ist.

12. Sensor nach einem der vorstehenden Ansprüche 6 bis 11,
**dadurch gekennzeichnet, dass** wenigstens eine der Elektroden (3, 4) aus einem Teil einer Leiterbahn der elektronischen Anordnung (6a, 6b, 6c) gebildet ist.

13. Sensor nach Anspruch 1,
**dadurch gekennzeichnet, dass** der zweite Substratkörper (2) im Bereich der Elektrode (4) als verformbare Membran (5) ausgebildet ist.

14. Sensor nach Anspruch 13,
**dadurch gekennzeichnet, dass** der Sensor ein dämpfendes System aufweist, das geeignet ist, ein Schwingen der Membran (5) zu verhindern.

15. Sensor nach einem der vorstehenden Ansprüche,
**dadurch gekennzeichnet, dass** der Sensor einen Substratkörper aus Silizium aufweist.

16. Verwendung des Sensors nach einem der vorstehenden Ansprüche als Druck-, als Kraft-, als Beschleunigungs-, als Magnetfeld oder als Durchflussmengensensor.

## Claims

1. A capacitive sensor having a first and a second electrode (3, 4), which lie at a distance opposite each other and form a measurement capacitance, wherein the first electrode (3) is disposed on a first substrate member (1) and the second electrode (4) is disposed on a second substrate member (2), wherein at least one electrode (3, 4) for the locally resolving measurement comprises a plurality of spaced apart, two-dimensionally disposed elements (8) and is constructed with a three-dimensional structure,
**characterised in that** associated with each element (8) in the interior of the substrate member is an electronic configuration (6c) which comprises a signal-amplifying element (7), wherein each of these electronic configurations (6c) is designed so that during operation it processes the measurement signal from the associated element (8) by the individual element and in so doing provides it with a location-specific identification.

2. A capacitive sensor according to Claim 1,
**characterised in that** the three-dimensionally structured electrode (3, 4) comprises strip-shaped elements (8) which are disposed parallel to each other.

3. A sensor according to Claim 1,
**characterised in that** the plurality of elements (8) are disposed in the manner of a chess board.

4. A sensor according to one of Claims 1 or 3,
**characterised in that** the elements (8) have a circular construction.

5. A sensor according to one of Claims 1 or 3,
**characterised in that** the elements (8) have a square construction.

6. A sensor according to one of the preceding Claims,
**characterised in that** an electronic configuration for processing the measurement signals (6a, 6b, 6c, 6d) is integrated at least in one of the substrate members.

7. A sensor according to Claim 6,
**characterised in that** the electronic configuration for processing the measurement signals (6a, 6b, 6c) is disposed beneath the.electrode (3, 4) of the respective substrate member (1, 2).

8. A sensor according to Claim 6 or 7,
**characterised in that** the integrated electronic configuration for processing the measurement signals (6a, 6c) comprise elements for the locally resolving processing of the locally resolving measurement.

9. A sensor according to Claim 8,
**characterised in that** the elements for the locally resolving processing of the electronic configuration for processing the measurement signals (6a, 6b, 6c) are three-dimensionally associated with the individual elements (8) of the three-dimensionally structured electrode (3) and for shortening the signal paths are each disposed directly adjacent to an element (8) in the substrate (1, 2).

10. A sensor according to one of the preceding Claims,
**characterised in that** the second substrate member (2) is constructed in the region of the electrode (4) as a deformable membrane (5)
and **in that** the electronic configuration for processing the measurement signals (6a, 6c) is integrated in the first substrate member (1).

11. A sensor according to one of the preceding Claims 6 to 10,
**characterised in that** a first part of the electronic configuration (6a) is disposed in the first substrate member (1) and a second part of the electronic configuration (6b) is disposed in a second substrate member (2).

12. A sensor according to one of the preceding Claims 6 to 11,
**characterised in that** at least one of the electrodes (3, 4) is formed from a part of a track conductor of the electronic configuration (6a, 6b, 6c).

13. A sensor according to Claim 1,
**characterised in that** the second substrate member (2) is constructed as a deformable membrane (5) in the region of the electrode (4).

14. A sensor according to Claim 13,
**characterised in that** the sensor has a damping system which is suitable for preventing an oscillation of the membrane (5).

15. A sensor according to one of the preceding Claims,
**characterised in that** the senor has a substrate body made from silicon.

16. Use of the sensor according to one of the preceding Claims as a pressure, force, acceleration, magnetic field or as a flow rate sensor.

## Revendications

1. Capteur capacitif comportant une première et une seconde électrode (3, 4) situées en face l'une de l'autre, à distance l'une de l'autre, et formant une capacité de mesure, la première électrode (3) étant disposée sur un premier corps support (1) et la seconde électrode (4) sur un second corps support (2), au moins une électrode (3, 4) comprenant, pour la mesure à résolution locale, une pluralité d'éléments (8) disposés de manière bidimensionnelle, situés à distance les uns des autres, et étant conçue de manière structurée dans l'espace,
**caractérisé en ce qu'**
à chaque élément (8) est associé, à l'intérieur du corps support, un dispositif électronique (6c) qui présente respectivement un élément amplificateur de signal (7), chacun de ces dispositifs électroniques (6c) étant configuré de manière que, pendant le fonctionnement, il traite individuellement par élément le signal de mesure de l'élément associé (8) et le munit ainsi d'une identification spécifique locale.

2. Capteur capacitif selon la revendication 1,
**caractérisé en ce que**
l'électrode structurée dans l'espace (3, 4) comprend des éléments (8) en forme de bandes, disposés parallèlement les uns aux autres.

3. Capteur selon la revendication 1,
**caractérisé en ce que**
la pluralité des éléments (8) est disposée à la manière d'un échiquier.

4. Capteur selon l'une des revendications 1 ou 3,
**caractérisé en ce que**
les éléments (8) sont conçus en forme circulaire.

5. Capteur selon l'une des revendications 1 ou 3,
**caractérisé en ce que**
les éléments (8) sont conçus en forme carrée.

6. Capteur selon l'une des revendications précédentes,
**caractérisé en ce qu'**
un dispositif électronique de traitement des signaux de mesure (6a, 6b, 6c, 6d) est intégré dans au moins l'un des corps supports.

7. Capteur selon la revendication 6,
**caractérisé en ce que**
le dispositif électronique de traitement des signaux de mesure (6a, 6b, 6c) est disposé en dessous de l'électrode (3, 4) du corps support (1, 2) respectif.

8. Capteur selon la revendication 6 ou 7,
**caractérisé en ce que**
le dispositif électronique intégré de traitement des signaux de mesure (6a, 6c) comprend des éléments pour le traitement à résolution locale de la mesure à résolution locale.

9. Capteur selon la revendication 8,
**caractérisé en ce que**
les éléments de traitement à résolution locale du dispositif électronique de traitement des signaux de mesure (6a, 6b, 6c) sont associés dans l'espace aux éléments (8) individuels de l'électrode structurée dans l'espace (3) et, pour raccourcir les trajets des signaux, sont disposés dans le support (1,2), de manière directement adjacente à respectivement un élément (8).

10. Capteur selon l'une des revendications précédentes 6 à 10,
**caractérisé en ce que**
le second corps support (2) est conçu, dans la zone de l'électrode (4) en tant que membrane déformable (5), et le dispositif électronique de traitement des signaux de mesure (6a, 6c) est intégré dans le premier corps support (1).

11. Capteur selon l'une des revendications précédentes,
**caractérisé en ce qu'**
une première partie du dispositif électronique (6a) est disposée dans le premier corps support (1) et une seconde partie du dispositif électronique (6b) dans un second corps support (2).

12. Capteur selon l'une des revendications précédentes 6 à 11,
**caractérisé en ce qu'**
au moins l'une des électrodes (3, 4) est constituée d'une partie d'une piste conductrice du dispositif électronique (6a, 6b, 6c).

13. Capteur selon la revendication 1,
**caractérisé en ce que**
le second corps support (2) est conçu, dans la zone de l'électrode (4) en tant que membrane déformable (5).

14. Capteur selon la revendication 13,
**caractérisé en ce que**
le capteur présente un système amortissant qui est apte à empêcher une oscillation de la membrane (5).

15. Capteur selon l'une des revendications précédentes,
**caractérisé en ce que**
le capteur présente un corps support en silicium.

16. Utilisation du capteur selon l'une des revendications précédentes en tant que capteur de pression, de force, d'accélération, de champ magnétique ou de débit.
